# EUROPÄISCHE PATENTANMELDUNG

(11) **EP 3 470 174 A1**
(43) Veröffentlichungstag der Anmeldung: **17.04.2019**
(21) Anmeldenummer: 18020048.7
(22) Anmeldetag: 05.02.2018
(51) Int. Cl.: B24B 31/06, B23P 25/00

(54) **VERFAHREN UND VORRICHTUNG ZUM KALTENTGRATEN VON FORMTEILEN**

(30) Priorität: 12.10.2017 DE 102017009498
(71) Anmelder: Linde Aktiengesellschaft, 80331 München (DE); Lauer, Petra, 66620 Nonnweiler-Kastel (DE)
(72) Erfinder: Schmand, Ralf, 85716 Unterschleißheim (DE); Lauer, Daniel, 66620 Nonnweiler-Kastel (DE)
(74) Vertreter: Gellner, Bernd

(57) **Zusammenfassung**

Die Erfindung betrifft ein Verfahren und eine Vorrichtung (100) zum Entgraten von Formteilen (10). Bei dem Verfahren wird ein Formteil (10) mit wenigstens einem Grat (11) zur Verfügung gestellt, wobei der Grat (11) und/oder das Formteil (10) gekühlt wird, so dass der Grat (11) durch das Kühlen versprödet wird, und wobei das Formteil (10) in mechanische Schwingung versetzt wird, so dass der wenigstens eine versprödete Grat (11) mittels der durch die mechanische Schwingung auf das Formteil (10) übertragenen kinetischen Energie von dem Formteil (10) abgetrennt wird.

Die erfindungsgemäße Vorrichtung (100) ist dazu ausgebildet, einen Grat (11) eines Formteils (10) zu kühlen und weist eine Einrichtung (101) zum Erzeugen mechanischer Schwingungen auf, welche dazu ausgebildet ist, den Grat (11) und/oder das Formteil (10) in mechanische Schwingung zu versetzen.

## Beschreibung

Die Erfindung betrifft ein Verfahren zum Entgraten von Formteilen, insbesondere Elastomer-Formteilen.

Formteile, z.B. aus Elastomeren, weisen herstellungsbedingt häufig Grate, also unerwünschtes Überschussmaterial auf.

Nach dem Stand der Technik wird zur Entfernung solcher Grate unter anderem das sogenannte Kaltentgraten eingesetzt. Bei dieser Methode werden die Formteile auf eine Temperatur nahe der Glastemperatur (auch als Glasübergangstemperatur bezeichnet) des entsprechenden Materials heruntergekühlt, so dass die Formteile versprödet werden und die Grate durch Übertragen von kinetischer Energie leichter von den Formteilen abgetrennt werden können als bei Umgebungstemperatur.

Das Dokument EP 2 143 528 A1 beschreibt ein Kaltentgratungsverfahren, bei dem die kinetische Energie zum Entfernen der Grate durch Brechwerkzeuge oder Schlaggut in einem Behälter zur Verfügung gestellt wird.

Weiterhin ist ein Kaltentgratungsverfahren bekannt, bei dem Trockeneis-Pellets auf die Formteile aufgebracht werden, um die Grate zu entfernen (z.B. DE 2015 003 942 A1 und EP 3 072 638 A1).

Diese Verfahren des Standes der Technik haben den Nachteil, dass sie insbesondere aufgrund der verwendeten Verbrauchsmittel wie Schlaggut oder Trockeneispellets relativ aufwendig und teuer sind und sich nur schwierig automatisieren lassen.

Bei kleineren Elastomer-Formteilen mit einfacher Geometrie werden weiterhin nach dem Stand der Technik verschiedene Abrasionsvorrichtungen eingesetzt (z.B. DE 8810621 U1, DE 10 2005 040 421 A1). Hierbei werden die Bauteile mit Gussgrat durch Einwirkung von Kältemittel versprödet und der Grat durch in die Bearbeitungstrommel eingestrahlte Kälte-Strahlmittel entfernt.

Eine Bearbeitung von länglichen Formteilen wie z.B. Fensterdichtungen im Bereich Automotive kann jedoch aufgrund von Beschädigungen in solchen Anlagen nicht wirtschaftlich sinnvoll durchgeführt werden. Gerade in diesem Bereich wäre eine zuverlässige automatisierte Entgratung wünschenswert, da hier solche Dichtungen zumeist manuell durch Schleifen, mittels Abreißlippen oder mit schneidenden Werkzeugen bearbeitet werden. Dies bedingt einen hohen Personaleinsatz und ist qualitativ abhängig von dem jeweiligen Bearbeiter.

Bisherige Versuche eine automatisierte Entgratung umzusetzen, bedingen in der Regel ein robotergesteuertes Nachfahren der Formkonturen was ebenfalls einen großen Zeiteinsatz bedeutet.

Ein weiterer Nachteil der bekannten Kaltentgratungsverfahren, insbesondere bei der Anwendung mittels Roboter (siehe DE 10 2015 003 942) aber auch bei anderen Abkühlungen insbesondere mit LIN (Flüssigstickstoff), besteht darin, dass das Kühlmedium direkt mit dem Produkt in Berührung kommt. Hierbei kann es durch massive Unterkühlung zu einer unerwünschten Schädigung des Produktes kommen.

Daher ist es die Aufgabe der vorliegenden Erfindung ein, insbesondere automatisierbares, Verfahren zum Entgraten von Formteilen zur Verfügung zu stellen, welches bezüglich der oben genannten Nachteile des Standes der Technik verbessert ist. Insbesondere soll ein Verfahren zur Verfügung gestellt werden, das ein automatisiertes und wirtschaftliches Entgraten besonders von länglichen und dünnen Formteilen mit gleichbleibender Qualität ermöglicht.

Diese Aufgabe wird durch den Gegenstand der unabhängigen Ansprüche 1 (Verfahren) und 10 (Vorrichtung) gelöst. Vorteilhafte Ausführungsformen der Erfindung sind in den Unteransprüchen 2 bis 9 angegeben und werden im Folgenden beschrieben.

Ein erster Aspekt der Erfindung betrifft ein Verfahren zum Entgraten von Formteilen, wobei ein Formteil, insbesondere ein Formteil aus einem Elastomer, mit wenigstens einem Grat zur Verfügung gestellt wird, und wobei der Grat und/oder das Formteil gekühlt wird, insbesondere auf eine Glastemperatur des Materials des Formteils, so dass der Grat durch das Kühlen versprödet wird, und wobei der Grat und/oder das Formteil in mechanische Schwingung versetzt wird, so dass der versprödete Grat mittels der durch die mechanische Schwingung auf den Grat und/oder das Formteil übertragenen auf den Grat einwirkenden kinetischen Energie von dem Formteil abgetrennt wird, insbesondere an der Gratwurzel.

Unter einem Grat ist dabei jegliche Form von Überschussmaterial des Formteils zu verstehen, welches insbesondere bei der Herstellung des Formteils entsteht (z.B. bei der Formgebung von Elastomer-Bauteilen bzw. beim Spritzgießen aufgrund einer Teilung des Gießwerkzeuges bzw. des Formwerkzeuges) und für die Verwendung des Formteils unerwünscht ist. Dazu gehören z.B. auch Noppen oder Verschmutzungen.

Der Begriff Gratwurzel bezeichnet dabei den Bereich, an dem der besagte Grat mit dem Formteil verbunden ist.

Weiterhin werden im Sinne der vorliegenden Erfindung unter dem Begriff Elastomer neben Kautschuk, insbesondere vulkanisiertem Kautschuk, sowie synthetischem Kautschuk, sämtliche formfesten, elastisch verformbaren Kunststoffe verstanden, insbesondere Elastomere (z. B. Naturkautschuk oder Silikonkautschuk, siehe oben), thermoplastische Elastomere oder thermoplastische Kunststoffe, wie z. B. TPA, TPC, TPO, TPS, TPU oder TPV (siehe ISO 18064).

Bei dem Verfahren wird zumindest die Oberfläche des Formteils gekühlt, insbesondere auf eine Temperatur nahe der Glastemperatur des Materials, aus dem das Formteil gebildet ist.

Das Versetzen des Formteils in mechanische Schwingung (alternativ auch als Vibration bezeichnet) kann dabei während des Kühlens oder nach dem Kühlen erfolgen.

Zur Kühlung des Formteils soll erfindungsgemäß ein Medium eingesetzt werden, das genug Kälteenergie besitzt, dass das zu entfernende Überschussmaterial soweit heruntergekühlt wird, dass die eingebrachte kinetische Energie ausreicht dieses von dem Produkt zu trennen.

Das erfindungsgemäße Verfahren hat den Vorteil, dass die Bauteile automatisiert mit gleichbleibender Qualität entgratet werden können.

Zudem kann die benötigte Entgratungszeit der einzelnen Bauteile wie auch ganzer Chargen erfindungsgemäß verkürzt werden.

Weiterhin muss die Kälte durch die kurze Bearbeitungszeit aufgrund der zusätzlichen Vibrationen nicht in das gesamte Bauteil eingebracht werden, woraus sich Einsparungen gegenüber anderen Kälteentgratungsverfahren ergeben.

Gemäß einer Ausführungsform wird der Grat und/oder das Formteil mittels eines kryogenen Mediums gekühlt, so dass der wenigstens eine Grat durch das Kühlen versprödet wird.

Solche kryogenen Medien können bei dem Verfahren in gasförmiger, flüssiger oder fester Form zur Verfügung gestellt werden. Als gasförmige kryogene Medien können z.B. kalte Gase wie gasförmiges CO₂, Stickstoff oder Argon verwendet werden. Flüssige kryogene Medien können z.B. flüssiger Stickstoff (N2), unterkühlte Luft oder mit flüssigem Gas angereicherte Luft sein. Ein Beispiel für ein geeignetes festes kryogenes Medium ist festes CO₂ (Trockeneis). Dabei kann das Formteil direkt mit dem kryogenen Medium in Kontakt gebracht werden oder das Formteil kann indirekt über ein Wärmeübertragungsmedium mit dem kryogenen Medium in Kontakt gebracht werden.

Gemäß einer weiteren Ausführungsform wird das kryogene Medium in fester Form, insbesondere in Form von Trockeneispartikeln, zur Verfügung gestellt.

Das feste kryogene Medium kann dabei z.B. gemeinsam mit den Formteilen in einem Behälter zur Verfügung gestellt werden, so dass die Formteile in dem Behälter mittels des festen kryogenen Mediums gekühlt werden, und wobei die Formteile in dem Behälter in mechanische Schwingung versetzt werden. Der Behälter kann z.B. ein Vibrationsförderer oder ein Teil eines Vibrationsföderers sein. Alternativ dazu kann der Behälter z.B. auch eine sogenannte Trovaliermaschine oder Kugelmühle sein.

Insbesondere kann dabei das feste kryogene Medium neben seiner Kühlfunktion als Abrasivmedium wirken, das heißt, durch mechanischen Kontakt mit den Formteilen zusätzliche kinetische Energie zur Verfügung stellen, um die Grate von den jeweiligen Formteilen abzutrennen.

Da die Formteile nicht wie bei den herkömmlichen Kryogen-Entgratungsverfahren durchgekühlt werden, wird weniger Energie aufgewendet. Hierdurch wird die benötigte Entgratungszeit der einzelnen Formteile wie auch ganzer Chargen erheblich verkürzt und es werden Kosten eingespart.

Gemäß einer weiteren Ausführungsform werden die Formteile vor dem Erzeugen mechanischer Schwingungen mit einem ersten kryogenen Medium in Kontakt gebracht (also vorgekühlt) und anschließend mit einem zweiten kryogenen Medium in Kontakt gebracht, so dass die Formteile versprödet werden.

Gemäß einer weiteren Ausführungsform wird das kryogene Medium in Form von Trockeneispartikeln (also festem CO₂) zur Verfügung gestellt, wobei die Trockeneispartikel eine maximale Erstreckung, insbesondere einen Durchmesser oder eine Länge, im Bereich von 1 µm bis 10 mm, insbesondere in einem Bereich von 0,05 mm bis 5 mm, aufweisen.

Die Trockeneispartikel weisen insbesondere eine Dichte im Bereich von 1,1 g/cm³ bis 1,7 g/cm³ auf.

Gemäß einer weiteren Ausführungsform werden den Trockeneispartikeln zusätzlich Strahlmittel oder Schleifmittel beigemischt. Dabei können die Strahlmittel insbesondere aus einem Kunststoff, z.B. Polycarbonat, Polypropylen, Polyethylen, Polyamid oder Polytetrafluorethylen gebildet sein. Alternativ dazu können die Strahlmittel auch natürlichen Ursprungs sein, wobei die Strahlmittel z.B. aus Kirschkernen oder Nusschalen gebildet sind. Die Schleifkörper können z.B. keramische Schleifkörper, insbesondere mit unterschiedlicher Formgebung, oder metallische Schleifkörper wie Stahlkugeln sein oder können aus Korund oder Glasbruch gebildet sein.

Gemäß einer weiteren Ausführungsform wird der Grat und/oder das Formteil mit einem Schleifkörper in Kontakt gebracht, wobei mittels des Schleifkörpers neben der durch die Schwingung zur Verfügung gestellten kinetischen Energie zusätzliche kinetische Energie auf den Grat und/oder das Formteil übertragen wird, so dass der versprödete Grat mittels der insgesamt auf den Grat und/oder das Formteil übertragenen kinetischen Energie von dem Formteil abgetrennt wird. Dies ist besonders dann vorteilhaft, wenn die mechanische Schwingung mittels einer azentrischen Bewegung erzeugt wird.

Gemäß einer weiteren Ausführungsform wird das kryogene Medium in flüssiger Form, insbesondere in einem Fluidbett, zur Verfügung gestellt.

Dies hat den Vorteil einer besonders guten Wärmeübertragung auf das Formteil bzw. den Grat.

Gemäß einer weiteren Ausführungsform wird ein Wärmeübertragungsmedium, insbesondere in flüssiger Form, zur Verfügung gestellt, wobei das Wärmeübertragungsmedium gekühlt wird, insbesondere mittels des kryogenen Mediums, und wobei der Grat und/oder das Formteil mit dem Wärmeübertragungsmedium in Kontakt gebracht wird, so dass der Grat und/oder das Formteil mittels des gekühlten Wärmeübertragungsmediums gekühlt wird und der Grat durch das Kühlen versprödet wird.

Das Wärmeübertragungsmedium ist dazu geeignet, Wärme von dem Grat und/oder dem Formteil auf das Wärmeübertragungsmedium zu übertragen, wenn der Grat und/oder das Formteil mit dem Wärmeübertragungsmedium in Kontakt steht.

Das Wärmeübertragungsmedium kann in gasförmiger, flüssiger oder fester Form zur Verfügung gestellt werden bzw. vorliegen.

Gemäß einer weiteren Ausführungsform wird das Wärmeübertragungsmedium in fester Form zur Verfügung gestellt, wobei insbesondere das Wärmeübertragungsmedium durch ein Kunststoffgranulat (z.B. aufweisend oder bestehend aus Polyethylen, Polycarbonat oder Polypropylen) oder ein Metallpulver gebildet ist.

Gemäß einer weiteren Ausführungsform wird das Wärmeübertragungsmedium in flüssiger Form, insbesondere in einem Fluidbett, zur Verfügung gestellt, wobei der Grat und/oder das Formteil mit dem flüssigen Wärmeübertragungsmedium, insbesondere in dem Fluidbett, in Kontakt gebracht wird, so dass der Grat und/oder das Formteil mittels des gekühlten flüssigen Wärmeübertragungsmediums gekühlt wird und der Grat durch das Kühlen versprödet wird. Das in dem Fluidbett befindliche Wärmeübertragungsmedium kann z.B. mittels Kaltgas oder unterkühlter Luft so weit abgekühlt werden, dass die mittels Vibration eingebrachte kinetische Energie ausreicht, um das besagte Überschussmaterial, also den Grat, von dem Formteil abzutrennen.

Gemäß einer weiteren Ausführungsform ist das flüssige Wärmeübertragungsmedium eine Kältemischung, insbesondere aufweisend ein Salz, bevorzugt aufweisend mindestens 0,5 M Calciumchlorid (CaCl₂).

Dabei ist unter dem Begriff Kältemischung ein Gemisch von Stoffen zu verstehen, das dazu geeignet ist, einem mit der Kältemischung in Kontakt stehenden Körper Wärme zu entziehen. Insbesondere wird dabei zur Kühlung ein endothermer Lösungsvorgang, eine Schmelzpunkterniedrigung und/oder ein Phasenübergang wenigstens eines Bestandteils des Gemisches ausgenutzt.

Gemäß einer weiteren Ausführungsform ist das flüssige Wärmeübertragungsmedium ein Alkohol, insbesondere Ethanol oder Isopropanol.

Gemäß einer weiteren Ausführungsform werden die Schwingungen in dem flüssigen kryogenen Medium oder in dem flüssigen Wärmeübertragungsmedium erzeugt, so dass die Schwingungen von dem flüssigen kryogenen Medium oder von dem flüssigen Wärmeübertragungsmedium auf den mit dem flüssigen kryogenen Medium oder dem flüssigen Wärmeübertragungsmedium in Kontakt stehenden Grat und/oder auf das mit dem flüssigen kryogenen Medium oder dem flüssigen Wärmeübertragungsmedium in Kontakt stehende Formteil übertragen werden.

Gemäß einer weiteren Ausführungsform wird die mechanische Schwingung durch Übertragung von Druckstößen auf den Grat und/oder das Formteil erzeugt, wobei insbesondere die Druckstöße mittels eines Unwuchtmotors erzeugt werden.

Gemäß einer weiteren Ausführungsform wird die mechanische Schwingung mittels einer azentrischen Bewegung erzeugt, insbesondere mittels eines Unwuchtmotors. Insbesondere werden die Druckstöße z.B. auf einen Behälter einer Trovaliermaschine oder Kugelmühle übertragen, wobei der Behälter dazu ausgebildet ist, die Formteile aufzunehmen.

Gemäß einer weiteren Ausführungsform weist die mechanische Schwingung eine Frequenz von 16 kHz oder mehr auf. Dabei wird die auf den Grat und/oder das Formteil einwirkende kinetische Energie mittels Ultraschall auf den Grat und/oder das Formteil übertragen.

Dabei kann der Grat und/oder das Formteil z.B. in Kontakt mit einem Ultraschallgenerator stehen, der die mechanische Schwingung erzeugt und diese (z.B. über eine Ultraschallspitze) direkt auf den Grat und/oder das Formteil überträgt.

Alternativ dazu kann z.B. die mechanische Schwingung mittels eines Ultraschallgenerators erzeugt werden, wobei der Ultraschallgenerator, insbesondere über eine Ultraschallspitze, mit einem, insbesondere flüssigen, Medium, z.B. dem Wärmeübertragungsmedium, in Kontakt steht, so dass die mechanische Schwingung von dem Ultraschallgenerator auf das Medium übertragen wird, wobei der Grat und/oder das Formteil mit dem Medium in Kontakt steht, so dass die mechanische Schwingung von dem Medium auf den Grat und/oder das Formteil übertragen wird.

Eine Übertragung der kinetischen Energie kann mittels Ultraschall besonders effektiv auf den Grat und/oder das Formteil übertragen werden.

Gemäß einer weiteren Ausführungsform werden die Schwingungen in dem flüssigen kryogenen Medium oder in dem flüssigen Wärmeübertragungsmedium erzeugt, so dass die Schwingungen von dem flüssigen Wärmeübertragungsmedium auf den mit dem flüssigen Wärmeübertragungsmedium in Kontakt stehenden Grat und/oder das mit dem flüssigen Wärmeübertragungsmedium in Kontakt stehende Formteil übertragen werden, wobei die Schwingungen eine Frequenz von 16 kHz oder mehr aufweisen. Dabei werden die Schwingungen mittels Ultraschall auf den Grat und/oder das Formteil übertragen.

Ultraschall wird in flüssigen Medien besonders effektiv übertragen. Hierzu wird bei der vorliegenden Ausführungsform das ohnehin vorhandene Wärmeübertragungsmedium verwendet, welches den Grat und/oder das Formteil kühlt. Dadurch lässt sich diese Ausführungsform bei hoher Effektivität konstruktiv besonders einfach realisieren.

Gemäß einer weiteren Ausführungsform weist die mechanische Schwingung eine Frequenz von 5 Hz bis 20 Hz auf. Dabei wird die auf den Grat und/oder das Formteil einwirkende kinetische Energie mittels Infraschall auf den Grat und/oder das Formteil übertragen.

Ein zweiter Aspekt der Erfindung betrifft eine Vorrichtung zum Entgraten von Formteilen, insbesondere mittels des Verfahrens nach dem ersten Aspekt der Erfindung, wobei die Vorrichtung dazu ausgebildet ist, ein Formteil mit einem Grat und/oder einen Grat eines Formteils zu kühlen, so dass der Grat durch das Kühlen versprödbar ist.

Dabei ist erfindungsgemäß vorgesehen, dass die Vorrichtung weiterhin eine Einrichtung zum Erzeugen mechanischer Schwingungen aufweist, welche dazu ausgebildet ist, den Grat und/oder das Formteil in mechanische Schwingung zu versetzen, so dass der versprödete Grat mittels der durch die mechanische Schwingung auf den Grat und/oder das Formteil übertragenen kinetischen Energie von dem Formteil abtrennbar ist.

Die Einrichtung zum Erzeugen mechanischer Schwingungen kann z.B. ein Unwuchtmotor, ein Ultraschallgenerator oder ein Infraschallgenerator sein.

Die Vorrichtung kann z.B. durch Bereitstellen eines kryogenen Mediums in einem Innenraum zur Aufnahme des Formteils gekühlt werden und/oder es kann eine Kühlvorrichtung zum Kühlen des Grats und/oder des Formteils vorgesehen sein. Eine solche Kühlvorrichtung kann z.B. eine Einrichtung zum Aufbringen eines kryogenen Mediums auf den Grat und/oder das Formteil aufweisen bzw. durch eine solche Einrichtung realisiert sein.

Weiterhin kann die Vorrichtung ein Fluidbett zur Aufnahme eines kryogenen Mediums oder eines zusätzlichen Wärmeübertragungsmediums aufweisen, wobei ein in dem Fluidbett befindlicher Grat und/oder ein in dem Fluidbett befindliches Formteil mittels des kryogenen Mediums und/oder des zusätzlichen Wärmeübertragungsmediums kühlbar ist.

Weitere Ausführungsbeispiele der Erfindung werden im Folgenden anhand von Zeichnungen beschrieben. Dabei zeigen
- Fig. 1: eine Vorrichtung zum Entgraten von Formteilen unter Verwendung eines festen kryogenen Mediums und eines Unwuchtmotors gemäß einer ersten Ausführungsform;
- Fig. 2: eine Vorrichtung zum Entgraten von Formteilen unter Verwendung eines flüssigen kryogenen Mediums und eines Ultraschallgenerators gemäß einer zweiten Ausführungsform.

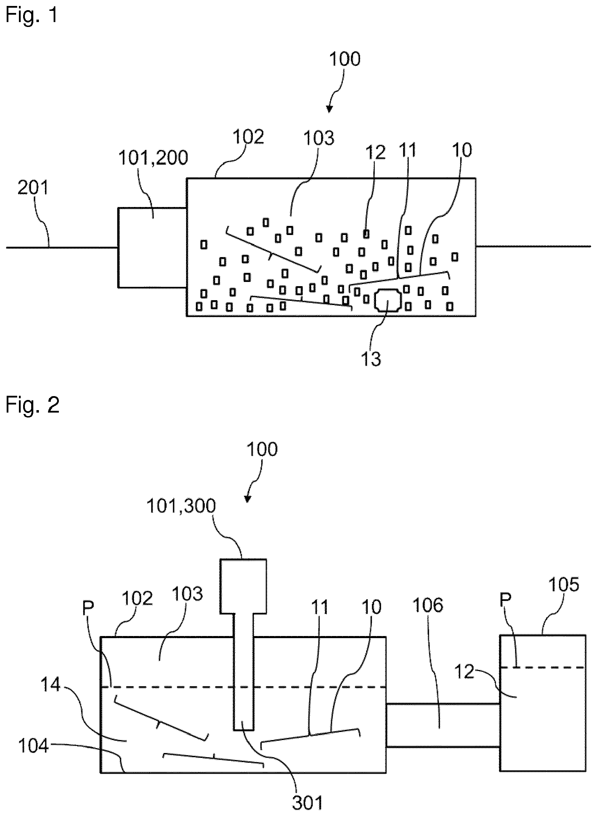

Die Fig. 1 zeigt eine schematische Darstellung einer erfindungsgemäßen Vorrichtung 100 zum Entgraten von Formteilen 10 im Längsschnitt bezüglich des Verlaufs einer Welle 201, um welche ein Behälter 102 der Vorrichtung 100 drehbar ist.

Der Behälter 102 umgibt einen Innenraum 103, der Formteile 10 enthält, wobei die Formteile 10 jeweils einen Grat 11 aufweisen. Weiterhin ist in dem Behälter 102 ein festes kryogenes Medium 12 in Form von Partikeln dargestellt. Diese Partikel können z.B. Pellets aus Trockeneis (festem CO₂) sein. Die Formteile 10 werden mittels des festen kryogenen Mediums 12 bis auf eine Temperatur nahe der Glastemperatur ihres Materials gekühlt, so dass die Formteile 10 versprödet werden.

Die Vorrichtung 100 weist außerdem einen Unwuchtmotor 200 auf, der dazu ausgebildet ist, den Behälter 102 um die Welle 201 derart zu drehen, dass der Behälter 102 in mechanische Schwingung versetzt wird. Somit werden auch die Formteile 10 in Schwingungen versetzt und es wird durch die Schwingungen eine kinetische Energie zur Verfügung gestellt, welche dazu führt, dass die Grate 11 der durch Kälte versprödeten Formteile 10 von den jeweiligen Formteilen 10 abgetrennt werden. Das heißt, der Unwuchtmotor 200 fungiert als Einrichtung 101 zum Erzeugen mechanischer Schwingungen.

Weiterhin zeigt die Fig. 1 einen in dem Behälter 102 positionierten Schleifkörper 13. Dieser ist dazu ausgebildet, bei mechanischem Kontakt mit den Formteilen 10 zusätzliche kinetische Energie zur Verfügung zu stellen, wenn der Behälter 102 durch die Wirkung des Unwuchtmotors 200 in Schwingung versetzt ist, so dass durch die insgesamt zur Verfügung gestellte Energie die Grate 11 der durch Kälte versprödeten Formteile 10 von diesen abgetrennt werden. Der Schleifkörper 13 kann an dem Behälter 102 (z.B. an einer Innenwandung des Behälters 102) befestigt sein, integral mit dem Behälter 102 ausgeführt sein oder lose (z.B. als Schleifgut) in dem Behälter 102 vorliegen. Natürlich kann auch eine Mehrzahl an Schleifkörpern 13 vorgesehen sein.

Fig. 2 zeigt eine schematische Schnittdarstellung einer zweiten Ausführungsform der erfindungsgemäßen Vorrichtung 100 zum Entgraten von Formteilen 10. Die Vorrichtung 100 weist einen Behälter 102 mit einem Innenraum 103 auf, der ein Fluidbett 104 bildet. In dem Fluidbett 104 liegt ein Wärmeübertragungsmedium 14 in flüssiger Form vor, wobei in Fig. 2 ein Pegel P des Wärmeübertragungsmediums 14 dargestellt ist. Weiterhin sind Formteile 10 mit Graten 11 dargestellt, die unterhalb des Pegels P positioniert sind, so dass die Formteile 10 mit dem flüssigen Wärmeübertragungsmedium 14 in direktem Kontakt stehen.

Das Wärmeübertragungsmedium 14 steht gemäß der in Fig. 2 gezeigten Ausführungsform über einen Wärmeübertrager 106 in wärmeleitender Verbindung mit einem kryogenen Medium 12, das in einem Kryogenbehälter 105 vorliegt. In Fig. 2 ist beispielhaft ein Pegel P eines flüssigen kryogenen Mediums 12 in dem Kryogenbehälter 105 dargestellt. Alternativ kann das kryogene Medium 12 aber z.B. auch in fester oder gasförmiger Form oder als Gas-Flüssigkeits-Gemisch in dem Kryogenbehälter 105 vorliegen.

Zum Wärmeaustausch des Wärmeübertragungsmediums 14 und des kryogenen Mediums 12 kann die Vorrichtung 100 weiterhin z.B. eine hier nicht dargestellte Pumpe aufweisen, die dazu ausgebildet ist, das Wärmeübertragungsmedium 14 in einem Kreislauf durch den Wärmeübertrager 106 zirkulieren zu lassen, so dass dieses mit dem kryogenen Medium 12 in Kontakt treten und Wärme austauschen kann.

Auf diese Weise (oder analog gemäß in nach dem Stand der Technik bekannter Weise) kann das Wärmeübertragungsmedium 14 mittels des kryogenen Mediums 12 gekühlt werden. Somit werden auch die mit dem Wärmeübertragungsmedium 14 in Kontakt stehenden Formteile 10 bis auf eine Temperatur nahe der Glastemperatur ihres Materials gekühlt, so dass die Formteile 10 versprödet werden.

Die in Fig. 2 gezeigte Vorrichtung 100 weist ferner einen Ultraschallgenerator 300 und eine mit dem Ultraschallgenerator 300 gekoppelte Ultraschallspitze 301 auf, wobei der Ultraschallgenerator 300 dazu ausgebildet ist, Ultraschallwellen zu erzeugen und über die Ultraschallspitze 301 auf das in dem Behälter 102 befindliche flüssige Wärmeübertragungsmedium 14 zu übertragen. Somit werden die Ultraschallwellen auch auf die mit dem Wärmeübertragungsmedium 14 in Kontakt stehenden Formteile 10 übertragen, so dass diese in Schwingung versetzt werden und die Grate 11 mittels der über die Schwingung übertragenen kinetischen Energie von den jeweiligen durch Kälte versprödeten Formteilen 10 abgetrennt werden.

Gemäß der in Fig. 2 dargestellten zweiten Ausführungsform fungiert also der Ultraschallgenerator 300 als Einrichtung 101 zum Erzeugen mechanischer Schwingungen.

**Bezugszeichenliste**

| | |
|---|---|
| 10 | Formteil |
| 11 | Grat |
| 12 | Kryogenes Medium |
| 13 | Schleifkörper |
| 14 | Wärmeübertragungsmedium |
| 100 | Vorrichtung zum Entgraten von Formteilen |
| 101 | Einrichtung zum Erzeugen mechanischer Schwingungen |
| 102 | Behälter |
| 103 | Innenraum |
| 104 | Fluidbett |
| 105 | Kryogenbehälter |
| 106 | Wärmeübertrager |
| 200 | Unwuchtmotor |
| 201 | Welle |
| 300 | Ultraschallgenerator |
| 301 | Ultraschallspitze |
| P | Pegel |

## Patentansprüche

1. Verfahren zum Entgraten von Formteilen (10), wobei ein Formteil (10) mit einem Grat (11) zur Verfügung gestellt wird, und wobei der Grat (11) und/oder das Formteil (10) gekühlt wird, so dass der Grat (11) durch das Kühlen versprödet wird, und wobei der Grat (11) und/oder das Formteil (10) in mechanische Schwingung versetzt wird, so dass der versprödete Grat (11) mittels der durch die mechanische Schwingung auf den Grat (11) und/oder das Formteil (10) übertragenen kinetischen Energie von dem Formteil (10) abgetrennt wird.

2. Verfahren nach Anspruch 1, wobei der Grat (11) und/oder das Formteil (10) mittels eines kryogenen Mediums (12) gekühlt wird, so dass der Grat (11) durch das Kühlen versprödet wird.

3. Verfahren nach Anspruch 2, wobei das kryogene Medium (12) in fester Form, insbesondere in Form von Trockeneispartikeln, zur Verfügung gestellt wird.

4. Verfahren nach Anspruch 2, wobei das kryogene Medium (12) in flüssiger Form zur Verfügung gestellt wird.

5. Verfahren nach einem der vorhergehenden Ansprüche, wobei ein Wärmeübertragungsmedium (14), insbesondere in flüssiger Form, zur Verfügung gestellt wird, und wobei das Wärmeübertragungsmedium (15) gekühlt wird, insbesondere mittels des kryogenen Mediums (12), und wobei der Grat (11) und/oder das Formteil (10) mit dem Wärmeübertragungsmedium (14) in Kontakt gebracht wird, so dass der Grat (11) und/oder das Formteil (10) mittels des gekühlten Wärmeübertragungsmediums (14) gekühlt wird und der Grat (11) durch das Kühlen versprödet wird.

6. Verfahren nach Anspruch 4 oder 5, wobei die Schwingungen in dem flüssigen kryogenen Medium (12) oder in dem flüssigen Wärmeübertragungsmedium (14) erzeugt werden, so dass die Schwingungen von dem flüssigen kryogenen Medium (12) oder von dem flüssigen Wärmeübertragungsmedium (14) auf den Grat (11) und/oder das Formteil (10) übertragen werden.

7. Verfahren nach einem der vorhergehenden Ansprüche, wobei die mechanische Schwingung durch Übertragung von Druckstößen auf den Grat (11) und/oder das Formteil (10) erzeugt wird, wobei insbesondere die Druckstöße mittels eines Unwuchtmotors (200) erzeugt werden.

8. Verfahren nach einem der Ansprüche 1 bis 7, wobei die mechanische Schwingung eine Frequenz von 16 kHz oder mehr aufweist.

9. Verfahren nach einem der Ansprüche 1 bis 7, wobei die mechanische Schwingung eine Frequenz von 5 Hz bis 20 Hz aufweist.

10. Vorrichtung (100) zum Entgraten von Formteilen (10), insbesondere mittels des Verfahrens nach einem der Ansprüche 1 bis 9, wobei die Vorrichtung (100) dazu ausgebildet ist, einen Grat (11) eines Formteils (10) zu kühlen, so dass der Grat (11) durch das Kühlen versprödbar ist,
**dadurch gekennzeichnet,**
**dass** die Vorrichtung (100) eine Einrichtung (101) zum Erzeugen mechanischer Schwingungen aufweist, welches dazu ausgebildet ist, den Grat (11) und/oder das Formteil (10) in mechanische Schwingung zu versetzen, so dass der wenigstens eine versprödete Grat (11) mittels der durch die mechanische Schwingung auf den Grat (11) und/oder das Formteil (10) übertragenen kinetischen Energie von dem Formteil (10) abtrennbar ist.
